# EUROPEAN PATENT APPLICATION

(11) **EP 3 719 625 A1**
(43) Date of publication of application: **07.10.2020**
(21) Application number: 18898910.7
(22) Date of filing: 24.12.2018
(51) Int. Cl.: G06F 3/0484

(54) **MOBILE TERMINAL CLICK EVENT RECOGNITION METHOD AND APPARATUS**

(30) Priority: 02.01.2018 CN 201810001504
(71) Applicant: ALIBABA GROUP HOLDING LIMITED, George Town, Grand Cayman (KY)
(72) Inventor: YU, Sen, Hangzhou, Zhejiang 311121 (CN)
(74) Representative: Goddar, Heinz J.
(86) International application number: PCT/CN2018/123026
(87) International publication number: WO 2019/134542

(57) **Abstract**

A mobile terminal tap event recognition method and apparatus are disclosed. The method includes: recording a touch event detected by a touch screen of a mobile terminal (S102); when a tap event is triggered, determining, according to the recorded touch event, whether the triggering of the tap event takes place in a page scrolling process (S104); and cancelling the tap event if the triggering of the tap event takes place in the page scrolling process (S106).

## Description

### TECHNICAL FIELD

This application relates to the field of terminal technologies, and in particular, to a mobile terminal tap event recognition method and apparatus.

### BACKGROUND

With the rapid development of Internet technologies, a browser control may be configured in application (APP) software of a terminal device to implement functions such as web page browsing. In a process of using a browser control to browse a web page, how to effectively and accurately recognize a tap event plays a vital role in browsing experience of a user.

### SUMMARY

In view of the above, this specification provides a mobile terminal tap event recognition method and apparatus.

In particular, this specification is implemented through the following technical solutions:
a mobile terminal tap event recognition method is provided, including:
recording a touch event detected by a touch screen of a mobile terminal;
when a tap event is triggered, determining, according to the recorded touch event, whether the triggering of the tap event takes place in a page scrolling process; and
cancelling the tap event if the triggering of the tap event takes place in the page scrolling process.

A mobile terminal tap event recognition apparatus is provided, including:
an event recording unit, configured to record a touch event detected by a touch screen of a mobile terminal;
a scrolling determining unit, configured to: when a tap event is triggered, determine, according to the recorded touch event, whether the triggering of the tap event takes place in a page scrolling process; and
a tap cancelling unit, configured to cancel the tap event if the triggering of the tap event takes place in the page scrolling process.

A mobile terminal tap event recognition apparatus is provided, including:
a processor;
a memory configured to store machine-executable instructions, where
by reading and executing the machine-executable instructions stored in the memory and corresponding to ** logic, the processor is caused to:
   record a touch event detected by a touch screen of a mobile terminal;
   when a tap event is triggered, determine, according to the recorded touch event, whether the triggering of the tap event takes place in a page scrolling process; and
   cancel the tap event if the triggering of the tap event takes place in the page scrolling process.

It can be learned from the foregoing description that in this specification, when the tap event is triggered, it is determined, according to the recorded touch event, whether the triggering of the tap event takes place in the page scrolling process, and the tap event is cancelled if the triggering of the tap event takes place in the page scrolling process. In this way, misjudgement of an operation intention of a user is prevented and accuracy of tap event recognition is improved.

### BRIEF DESCRIPTION OF THE DRAWINGS

FIG. 1 is a schematic flowchart of a mobile terminal tap event recognition method, according to an exemplary embodiment of this specification.
FIG. 2 is a schematic flowchart of another mobile terminal tap event recognition method, according to an exemplary embodiment of this specification.
FIG. 3 is a schematic flowchart of a touch event recording method, according to an exemplary embodiment of this specification.
FIG. 4 is a schematic structural diagram of a mobile terminal tap event recognition apparatus, according to an exemplary embodiment of this specification.
FIG. 5 is a block diagram of a mobile terminal tap event recognition apparatus, according to an exemplary embodiment of this specification.

### DETAILED DESCRIPTION OF THE INVENTION

Exemplary embodiments are described in detail herein, and examples of the exemplary embodiments are shown in the accompanying drawings. When the following descriptions relate to the accompanying drawings, unless indicated otherwise, same numbers in different accompanying drawings represent same or similar elements. Implementations described in the following exemplary embodiments are not all implementations of this specification. On the contrary, the implementations described herein are merely examples of the apparatus and method that are described in claims in detail and that are consistent with some aspects of this specification.

The terms used in this specification are merely for the purpose of describing specific embodiments, and are not intended to limit this specification. The terms "a", "said" and "the" of singular forms used in this specification and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this specification, first information may also be referred to as second information, and similarly, second information may also be referred to as first information. Depending on the context, the term "if' as used herein may be interpreted as "when ..." or "upon ..." or "in response to determining."

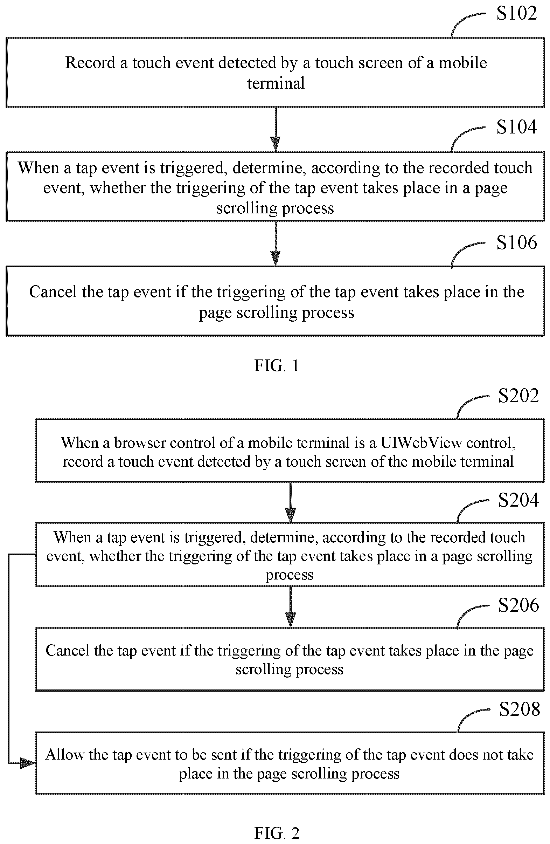

FIG. 1 is a schematic flowchart of a mobile terminal tap event recognition method, according to an exemplary embodiment of this specification.

The mobile terminal tap event recognition method can be applied to a mobile terminal, for example, a tablet computer, a mobile phone, or a personal digital assistant (PDA), and this is not specifically limited in this specification.

Referring to FIG. 1, the mobile terminal tap event recognition method may include the following steps:
Step 102, record a touch event detected by a touch screen of a mobile terminal.

In this embodiment, the touch event may include a touchstart event, a touchmove event, a touchend event, a touchcancel event, a scroll event, and the like.

In this embodiment, an event name of the touch event and a timestamp of the touch event may be recorded according to a related rule, and the timestamp is usually a time point at which the touch event occurs.

Step 104, when a tap event is triggered, determine, according to the recorded touch event, whether the triggering of the tap event takes place in a page scrolling process.

In this embodiment, the tap event may be independently detected by a third-party control. For a detection manner of the tap event, refer to the related technologies. This is not specifically limited in this specification.

When it is detected that the tap event is triggered, it may be determined, according to the recorded touch event, whether the triggering of the tap event takes place in the page scrolling process, that is, it is determined whether a user triggers the tap event in the page scrolling process.

Step 106, cancel the tap event if the triggering of the tap event takes place in the page scrolling process.

Based on the determination result of step 104, if the triggering of the tap event takes place in the page scrolling process, it may indicate that the tap event is used to stop page scrolling, not a browsing instruction entered for specified content on a page. Therefore, the tap event may be cancelled to prevent page switching.

It can be learned from the foregoing description that in this specification, when the tap event is triggered, it is determined, according to the recorded touch event, whether the triggering of the tap event takes place in the page scrolling process, and the tap event is cancelled if the triggering of the tap event takes place in the page scrolling process. In this way, misjudgement of an operation intention of a user is prevented and accuracy of tap event recognition is improved.

FIG. 2 is a schematic flowchart of another mobile terminal tap event recognition method, according to an exemplary embodiment of this specification.

Referring to FIG. 2, the mobile terminal tap event recognition method may include the following steps:

Step 202, when a browser control of a mobile terminal is a UIWebView control, record a touch event detected by a touch screen of the mobile terminal.

In this embodiment, the browser control includes a plurality of categories, for example, a UIWebView control of the iOS system, a WKWebView control of the iOS system, a UC3 kernel of the Android system, and a UC4 kernel of Android.

In the foregoing browser controls, the WKWebView control, the UC3 kernel, and the UC4 kernel can usually recognize a tap event more accurately. Therefore, in this embodiment, a category of the browser control of the mobile terminal may be determined first. If the category of the browser control is a UIWebView control, a subsequent step may be performed to record the touch event detected by the touch screen of the mobile terminal. If the category of the browser control is not a UIWebView control, the subsequent step may not be performed.

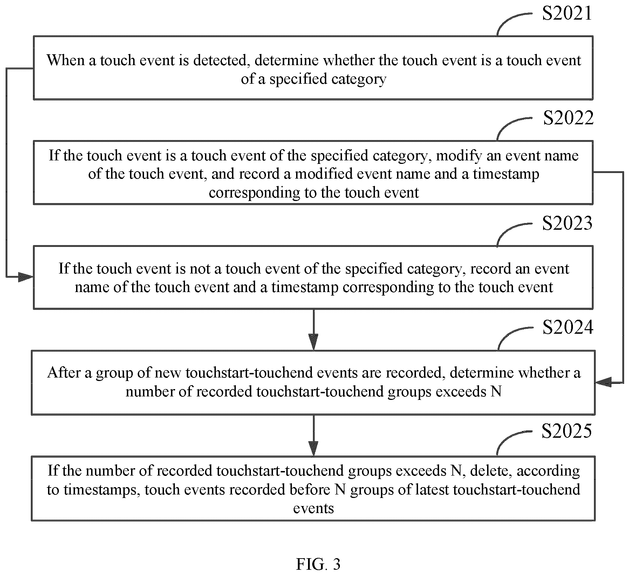

In this embodiment, referring to FIG. 3, a process of recording the touch event may include the following steps:
Step 2021, when the touch event is detected, determine whether the touch event is a touch event of a specified category.

In this embodiment, the touch event may include a touchstart event, a touchmove event, a touchend event, a touchcancel event, a scroll event, and the like. For a trigger opportunity of each touch event, refer to the related technologies. Details are not described in this specification.

The touch event of the specified category may be set in advance by a developer. For example, the touch event of the specified category may be set as a touchcancel event or a scroll event.

In this embodiment, if the detected touch event is a touchcancel event or a scroll event, step 2022 may be performed.

If the detected touch event is a touchstart event, a touchmove event, or a touchend event, step 2023 may be performed.

Step 2022, if the touch event is a touch event of the specified category, modify an event name of the touch event, and record a modified event name and a timestamp corresponding to the touch event.

In this embodiment, recording a touch event is generally recording an event name of the touch event and a timestamp corresponding to the touch event, and the timestamp is usually a time point at which the touch event is triggered. Certainly, other information of the touch event, such as attribute information of the touch event, may be recorded. This is not specifically limited in this specification.

Based on the determination result of step 2021, when the detected touch event is the touch event of the specified category, the event name of the touch event may be modified, and then the modified event name and the timestamp corresponding to the touch event may be recorded.

For example, when the detected touch event is a touchcancel event, an event name of the touchcancel event may be modified to touchend, and then a correspondence between touchend and a timestamp of the touchcancel event is saved.

In another example, when the detected touch event is a scroll event, it may be determined whether the scroll event is global page scrolling or regional page scrolling according to attribute information of the scroll event. In particular, a return value of a currently acting node event.target may be acquired first. If the return value is a document, it may be determined that the scroll event is global page scrolling. If the return value is not a document, it may be determined that the scroll event is regional page scrolling, that is, a region in a page is scrolling, rather than the entire page is scrolling.

When the scroll event is global page scrolling, an event name of the scroll event may be modified to scroll:window. When the scroll event is regional page scrolling, the event name of the scroll event is modified to scroll:target.

Certainly, according to different circumstances of the scroll event, the event name may also be modified to other event names, as long as global page scrolling can be distinguished from regional page scrolling. This is not specifically limited in this specification.

Step 2023, if the touch event is not a touch event of the specified category, record an event name of the touch event and a timestamp corresponding to the touch event.

Based on the determination result of step 2021, when the detected touch event is not the touch event of the specified category, the event name of the touch event and the timestamp corresponding to the touch event may be directly recorded.

For example, when the detected touch event is a touchstart event, a correspondence between touchstart and a timestamp of touchstart may be recorded.

In another example, when the detected touch event is a touchmove event, a correspondence between touchmove and a timestamp of touchmove may be recorded.

In another example, when the detected touch event is a touchend event, a correspondence between touchend and a timestamp of touchend may be recorded.

Step 2024, after a group of new touchstart-touchend events are recorded, determine whether a number of recorded touchstart-touchend groups exceeds N.

In this embodiment, after a new touch event is recorded, it may be determined whether a group of new touchstart-touchend events are recorded. A group of touchstart-touchend events usually are a touchstart event, *, and a touchend event. The sign "*" may represent [0, infinite] touchmove events, scroll:window events, or scroll:target events. That is, a group of touchstart-touchend events usually are a group of event records beginning with touchstart and ending with touchend. In particular, the determination may be performed after a touchend event has been recorded.

**Table 1**

| Number | Event name | Timestamp |
|---|---|---|
| 1 | touchstart | T1 |
| 2 | touchmove | T2 |
| 3 | touchend | T3 |

**Table 2**

| Number | Event name | Timestamp |
|---|---|---|
| 1 | touchstart | T11 |
| 2 | touchmove | T12 |
| 3 | scroll :target | T13 |
| 4 | touchend | T14 |

Referring to Table 1 and Table 2, Table 1 and Table 2 show two different groups of touchstart-touchend events, respectively. Certainly, Table 1 and Table 2 are merely exemplary descriptions. In actual application, a group of touchstart-touchend events may be represented in various other forms. Details are not described in this specification.

In this embodiment, after the group of new touchstart-touchend events are recorded, it may be determined whether the number of recorded touchstart-touchend groups exceeds N. N is a natural number greater than or equal to 1, and a specific value of N may be set by the developer. For example, N is equal to 2.

It should be noted that other touch events, such as scroll:target and scroll:window, may be further recorded between two groups of touchstart-touchend events that are adjacent in terms of time. This is not specifically limited in this specification.

Step 2025, if the number of recorded touchstart-touchend groups exceeds N, delete, according to timestamps, touch events recorded before N groups of latest touchstart-touchend events, where N is a natural number greater than or equal to 1.

Based on the determination result of step 2024, if it is determined that the number of recorded touchstart-touchend groups exceeds N, the touch events recorded before the N latest groups of touchstart-touchend events are deleted according to the timestamps.

Taking N being 2 as an example, only latest two groups of touchstart-touchend events may be retained. It is assumed that the latest two groups of touchstart-touchend events are shown in Table 1 and Table 2, respectively. If a timestamp T1 is earlier than a timestamp T11, all records whose timestamps are earlier than T1 may be deleted.

Certainly, in actual application, there may be records of other touch events between T3 and T11. Timestamps of these touch events are later than T1, and therefore the touch events need to be retained.

Step 204, when a tap event is triggered, determine, according to the recorded touch event, whether the triggering of the tap event takes place in a page scrolling process.

In this embodiment, when a tap event (click event) is triggered, it may be determined whether the tap event is triggered in the page scrolling process according to the currently recorded touch event. Because page scrolling may be respectively global page scrolling and regional page scrolling, the determination may be separately performed for global page scrolling and regional page scrolling.

Still taking N being 2 as an example, when the recorded touch event is global page scrolling, that is, when the recorded scroll event is scroll:window, it may be determined whether there is a scroll:window event between a first group of touchstart-touchend events and a second group of touchstart-touchend events, and whether there is a scroll:window event in the second group of touchstart-touchend events.

If there is no scroll:window event between the first group of touchstart-touchend events and the second group of touchstart-touchend events, and there is a scroll:window event in the second group of touchstart-touchend events, it may be determined that the triggering of the tap event takes place in the page scrolling process. If the foregoing condition is not met, it may be determined that the triggering of the tap event does not take place in the page scrolling process.

The first group of touchstart-touchend events are usually a group of touchstart-touchend events with earlier timestamps, and correspondingly, the second group of touchstart-touchend events are usually a group of touchstart-touchend events with later timestamps.

**Table 3**

| Number | Event name | Timestamp |
|---|---|---|
| 1 | touchstart | T21 |
| 2 | touchmove | T22 |
| 3 | touchend | T23 |
| 4 | touchstart | T24 |
| 5 | touchmove | T25 |
| 6 | scroll:window | T26 |
| 7 | touchend | T27 |

Referring to the records shown in Table 3, the first group of touchstart-touchend events are entries with numbers 1 to 3, and the second group of touchstart-touchend events are entries with numbers 4 to 7. In the records shown in Table 3, if there is no scroll:window event between the first group of touchstart-touchend events and the second group of touchstart-touchend events, and there is a scroll:window event (a sixth entry shown in Table 3) in the second group of touchstart-touchend events, it may be determined that the triggering of the tap event takes place in the page scrolling process.

**Table 4**

| Number | Event name | Timestamp |
|---|---|---|
| 1 | touchstart | T31 |
| 2 | touchmove | T32 |
| 3 | touchend | T33 |
| 4 | scroll:window | T34 |
| 5 | touchstart | T35 |
| 6 | touchmove | T36 |
| 7 | scroll :window | T37 |
| 8 | touchend | T38 |

Referring to the records shown in Table 4, the first group of touchstart-touchend events are entries with numbers 1 to 3, and the second group of touchstart-touchend events are entries with numbers 5 to 8. In the records shown in Table 4, if there is a scroll:window event (a fourth entry shown in Table 4) between the first group of touchstart-touchend events and the second group of touchstart-touchend events, it may be determined that the triggering of the tap event does not take place in the page scrolling process.

Still taking N being 2 as an example, when the recorded touch event is regional page scrolling, that is, when the recorded scroll event is scroll:target, it may be determined whether there is a scroll:target event in the first group of touchstart-touchend events, and whether there is a scroll:target event in the second group of touchstart-touchend events.

If there is no scroll:target event in the first group of touchstart-touchend events, and there is a scroll:target event in the second group of touchstart-touchend events, it may be determined that the triggering of the tap event takes place in the page scrolling process. Alternatively, if there is no scroll:target event in the first group of touchstart-touchend events, and there is a scroll:target event after the second group of touchstart-touchend events, it may be determined that the triggering of the tap event takes place in the page scrolling process. If the foregoing condition is not met, it may be determined that the triggering of the tap event does not take place in the page scrolling process.

**Table 5**

| Number | Event name | Timestamp |
|---|---|---|
| 1 | touchstart | T41 |
| 2 | touchmove | T42 |
| 3 | touchend | T43 |
| 4 | touchstart | T44 |
| 5 | touchmove | T45 |
| 6 | scroll:target | T46 |
| 7 | touchend | T47 |

Referring to the records shown in Table 5, the first group of touchstart-touchend events are entries with numbers 1 to 3, and the second group of touchstart-touchend events are entries with numbers 4 to 7. In the records shown in Table 5, if there is no scroll:target event in the first group of touchstart-touchend events, and there is a scroll:target event (a sixth entry shown in Table 5) in the second group of touchstart-touchend events, it may be determined that the triggering of the tap event takes place in the page scrolling process.

**Table 6**

| Number | Event name | Timestamp |
|---|---|---|
| 1 | touchstart | T51 |
| 2 | touchmove | T52 |
| 3 | scroll:target | T53 |
| 4 | touchend | T54 |
| 5 | touchstart | T55 |
| 6 | scroll:target | T56 |
| 7 | touchend | T57 |

Referring to the records shown in Table 6, the first group of touchstart-touchend events are entries with numbers 1 to 4, and the second group of touchstart-touchend events are entries with numbers 5 to 7. In the records shown in Table 6, if there is a scroll:target event (a third entry shown in Table 6) in the first group of touchstart-touchend events, it may be determined that the triggering of the tap event does not take place in the page scrolling process.

Certainly, in actual application, the foregoing rule may apply to trigger events recorded in other forms. Details are not described in this specification.

In addition, when the value of N is other values, the developer may set a corresponding determining rule according to the value of N. This is not specifically limited in this specification.

Step 206, cancel the tap event if the triggering of the tap event takes place in the page scrolling process.

Based on the determination result of step 204, if the triggering of the tap event takes place in the page scrolling process, it may indicate that the tap event is used to stop page scrolling, not a browsing instruction entered for specified content on a page. Therefore, the tap event may be cancelled to prevent page switching.

Step 208, allow the tap event to be sent if the triggering of the tap event does not take place in the page scrolling process.

Based on the determination result of step 204, if the triggering of the tap event does not take place in the page scrolling process, it indicates that the tap event is usually used to browse a designated link, and therefore the tap event may be allowed to be sent.

It can be learned from the foregoing description that in this specification, when the tap event is triggered, it is determined, according to the recorded touch event, whether the triggering of the tap event takes place in the page scrolling process, and the tap event is cancelled if the triggering of the tap event takes place in the page scrolling process. In this way, misjudgement of an operation intention of a user is prevented and accuracy of tap event recognition is improved.

It should be noted that, in actual application, touch event rules that are not in the page scrolling process may also be summarized for determination. This is not specifically limited in this specification.

Corresponding to the foregoing embodiment of the mobile terminal tap event recognition method, this specification further provides an embodiment of a mobile terminal tap event recognition apparatus.

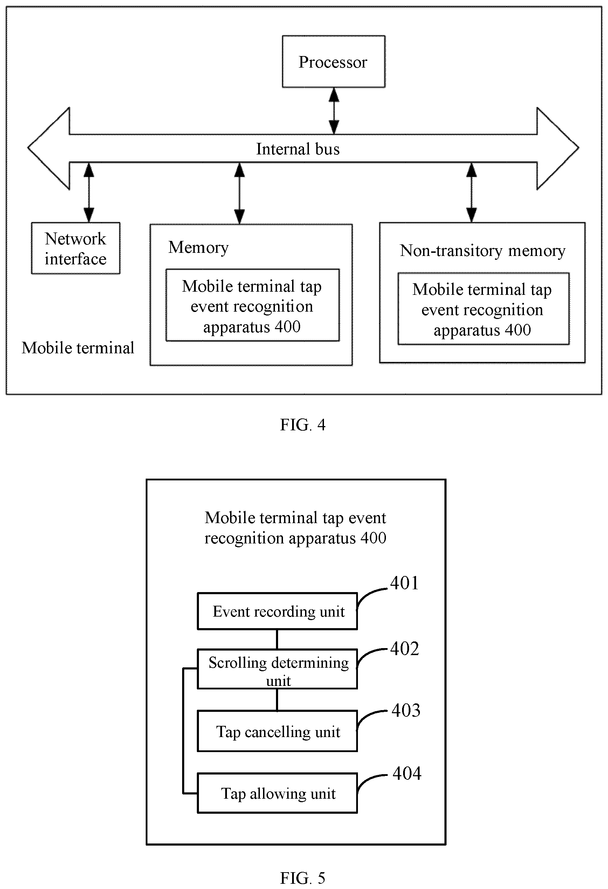

The embodiment of the mobile terminal tap event recognition apparatus in this specification may be applicable to a mobile terminal. The apparatus embodiment may be implemented by software, or by hardware or a combination of software and hardware. Taking software implementation as an example, as an apparatus in a logical sense, the apparatus is formed by reading a corresponding computer program instruction in a non-transitory memory into a memory through a processor of a mobile terminal in which the apparatus is located. In terms of hardware, FIG. 4 is a hardware structure diagram of a mobile terminal in which a mobile terminal tap event recognition apparatus is located in this specification. In addition to a processor, a memory, a network interface, and a non-transitory memory shown in FIG. 4, the mobile terminal in which the apparatus is located in this embodiment may include other hardware. Details are not described.

FIG. 5 is a block diagram of a mobile terminal tap event recognition apparatus, according to an exemplary embodiment of this specification.

Referring to FIG. 5, the mobile terminal tap event recognition apparatus 400 may be applied to the mobile terminal shown in FIG. 4 and includes an event recording unit 401, a scrolling determining unit 402, a tap cancelling unit 403, and a tap allowing unit 404.

The event recording unit 401 is configured to record a touch event detected by a touch screen of a mobile terminal.

The scrolling determining unit 402 is configured to: when a tap event is triggered, determine, according to the recorded touch event, whether the triggering of the tap event takes place in a page scrolling process.

The tap cancelling unit 403 is configured to cancel the tap event if the triggering of the tap event takes place in the page scrolling process.

The tap allowing unit 404 is configured to allow the tap event to be sent if the triggering of the tap event does not take place in the page scrolling process.

Optionally, the event recording unit 401 is configured to: when a browser control of the mobile terminal is a UIWebView control, record the touch event detected by the touch screen of the mobile terminal.

Optionally, the event recording unit 401 is configured to: when the detected touch event is a touch event of a specified category, modify an event name of the touch event, and record a modified event name and a timestamp corresponding to the touch event;
when the detected touch event is not a touch event of the specified category, record an event name of the touch event and a timestamp corresponding to the touch event;
after a group of new touchstart-touchend events are recorded, determine whether a number of recorded touchstart-touchend groups exceeds N; and
if the number of recorded touchstart-touchend groups exceeds N, delete, according to timestamps, touch events recorded before N groups of latest touchstart-touchend events, where N is a natural number greater than or equal to 1.

Optionally, when the touch event of the specified category is a touchcancel event, the event recording unit 401 is configured to modify an event name of the touchcancel event to touchend; and
when the touch event of the specified category is a scroll event, the event recording unit 401 is configured to determine whether the scroll event is global page scrolling or regional page scrolling according to attribute information of the scroll event; modify an event name of the scroll event to scroll:window when the scroll event is global page scrolling; and modify the event name of the scroll event to scroll:target when the scroll event is regional page scrolling.

Optionally, when N is equal to 2, the scrolling determining unit 402 is configured to:
when the recorded touch event is global page scrolling, if there is no scroll:window event between a first group of touchstart-touchend events and a second group of touchstart-touchend events, and there is a scroll:window event in the second group of touchstart-touchend events, determine that the triggering of the tap event takes place in the page scrolling process; and
when the recorded touch event is regional page scrolling, if there is no scroll:target event in the first group of touchstart-touchend events, and there is a scroll :target event in the second group of touchstart-touchend events or after the second group of touchstart-touchend events, determine that the triggering of the tap event takes place in the page scrolling process.

For details about the implementation processes of the functions and effects of the units in the foregoing apparatus, refer to the implementation processes of the corresponding steps in the foregoing method. Details are not described herein again.

The apparatus embodiment generally corresponds to the method embodiments, and therefore for related parts, reference may be made to partial descriptions in the method embodiments. The described apparatus embodiment is merely an example. The units described as separate parts may or may not be physically separate, and parts displayed as units may or may not be physical units, may be located in one position, or may be distributed on a plurality of network units. A part or all of the modules may be selected according to actual requirements to achieve the objectives of the solutions of this specification. A person of ordinary skill in the art may understand and implement the embodiments of this application without creative efforts.

The system, apparatus, module, or unit described in the foregoing embodiment may be specifically implemented by a computer chip or entity, or a product with a specified function. A typical implementation device is a computer, and a specific form of the computer may be a personal computer, a laptop computer, a cellular phone, a camera phone, a smartphone, a personal digital assistant, a media player, a navigation device, an email device, a game console, a tablet computer, a wearable device, or a combination of any of these devices.

Corresponding to the foregoing embodiment of the mobile terminal tap event recognition method, this specification further provides a mobile terminal tap event recognition apparatus. The mobile terminal tap event recognition apparatus includes a processor and a memory configured to store machine-executable instructions. The processor and the memory are usually interconnected through an internal bus. In other possible implementations, the device may further include an external interface for communication with other devices or components.

In this embodiment, by reading and executing the machine-executable instructions stored in the memory and corresponding to mobile terminal tap event recognition logic, the processor is caused to:
record a touch event detected by a touch screen of a mobile terminal;
when a tap event is triggered, determine, according to the recorded touch event, whether the triggering of the tap event takes place in a page scrolling process; and
cancel the tap event if the triggering of the tap event takes place in the page scrolling process.

Optionally, by reading and executing the machine-executable instructions stored in the memory and corresponding to mobile terminal tap event recognition logic, the processor is further caused to:
allow the tap event to be sent if the triggering of the tap event does not take place in the page scrolling process.

Optionally, when recording the touch event detected by the touch screen of the mobile terminal, the processor is caused to:
when a browser control of the mobile terminal is a UIWebView control, record the touch event detected by the touch screen of the mobile terminal.

Optionally, when recording the touch event detected by the touch screen of the mobile terminal, the processor is caused to:
when the detected touch event is a touch event of a specified category, modify an event name of the touch event, and record a modified event name and a timestamp corresponding to the touch event;
when the detected touch event is not a touch event of the specified category, record an event name of the touch event and a timestamp corresponding to the touch event;
after a group of new touchstart-touchend events are recorded, determine whether a number of recorded touchstart-touchend groups exceeds N; and
if the number of recorded touchstart-touchend groups exceeds N, delete, according to timestamps, touch events recorded before N groups of latest touchstart-touchend events, where N is a natural number greater than or equal to 1.

Optionally, when the touch event of the specified category is a touchcancel event, the modifying an event name of the touch event includes: modifying an event name of the touchcancel event to touchend; and
when the touch event of the specified category is a scroll event, the modifying an event name of the touch event includes:
determining whether the scroll event is global page scrolling or regional page scrolling according to attribute information of the scroll event;
modifying an event name of the scroll event to scroll:window if the scroll event is global page scrolling; and
modifying the event name of the scroll event to scroll:target if the scroll event is regional page scrolling.

Optionally, when N is equal to 2, when determining, according to the recorded touch event, whether the triggering of the tap event takes place in the page scrolling process, the processor is further caused to:
when the recorded touch event is global page scrolling, if there is no scroll:window event between a first group of touchstart-touchend events and a second group of touchstart-touchend events, and there is a scroll:window event in the second group of touchstart-touchend events, determine that the triggering of the tap event takes place in the page scrolling process; and
when the recorded touch event is regional page scrolling, if there is no scroll:target event in the first group of touchstart-touchend events, and there is a scroll:target event in the second group of touchstart-touchend events or after the second group of touchstart-touchend events, determine that the triggering of the tap event takes place in the page scrolling process.

Corresponding to the foregoing embodiments of the mobile terminal tap event recognition method, this specification further provides a computer-readable storage medium. The computer-readable storage medium stores a computer program, and when the program is executed by a processor, the following steps are implemented:
recording a touch event detected by a touch screen of a mobile terminal;
when a tap event is triggered, determining, according to the recorded touch event, whether the triggering of the tap event takes place in a page scrolling process; and
cancelling the tap event if the triggering of the tap event takes place in the page scrolling process.

Optionally, the following step is further included:
allowing the tap event to be sent if the triggering of the tap event does not take place in the page scrolling process.

Optionally, the recording a touch event detected by a touch screen of a mobile terminal includes:
when a browser control of the mobile terminal is a UIWebView control, recording the touch event detected by the touch screen of the mobile terminal.

Optionally, the recording a touch event detected by a touch screen of a mobile terminal includes:
when the detected touch event is a touch event of a specified category, modifying an event name of the touch event, and recording a modified event name and a timestamp corresponding to the touch event;
when the detected touch event is not a touch event of the specified category, recording an event name of the touch event and a timestamp corresponding to the touch event;
after a group of new touchstart-touchend events are recorded, determining whether a number of recorded touchstart-touchend groups exceeds N; and
if the number of recorded touchstart-touchend groups exceeds N, deleting, according to timestamps, touch events recorded before N groups of latest touchstart-touchend events, where N is a natural number greater than or equal to 1.

Optionally, when the touch event of the specified category is a touchcancel event, the modifying an event name of the touch event includes: modifying an event name of the touchcancel event to touchend; and
when the touch event of the specified category is a scroll event, the modifying an event name of the touch event includes:
determining whether the scroll event is global page scrolling or regional page scrolling according to attribute information of the scroll event;
modifying an event name of the scroll event to scroll:window when the scroll event is global page scrolling; and
modifying the event name of the scroll event to scroll:target when the scroll event is regional page scrolling.

Optionally, when N is equal to 2, the determining, according to the recorded touch event, whether the triggering of the tap event takes place in a page scrolling process includes:
when the recorded touch event is global page scrolling, if there is no scroll:window event between a first group of touchstart-touchend events and a second group of touchstart-touchend events, and there is a scroll:window event in the second group of touchstart-touchend events, determining that the triggering of the tap event takes place in the page scrolling process; and
when the recorded touch event is regional page scrolling, if there is no scroll:target event in the first group of touchstart-touchend events, and there is a scroll:target event in the second group of touchstart-touchend events or after the second group of touchstart-touchend events, determining that the triggering of the tap event takes place in the page scrolling process.

The embodiments of this specification are described above. Other embodiments fall within the scope of the appended claims. In some embodiments, the actions or steps recorded in the claims may be performed in sequences different from those in the embodiments and an expected result may still be achieved. In addition, the processes depicted in the accompanying drawings do not necessarily require specific sequences or consecutive sequences to achieve an expected result. In some implementations, multitasking and parallel processing may be feasible or beneficial.

The foregoing descriptions are merely exemplary embodiments of this specification, but are not intended to limit this specification. Any modification, equivalent replacement, or improvement made without departing from the spirit and principle of this specification should fall within the protection scope of this specification.

## Claims

1. A mobile terminal tap event recognition method, comprising:
recording a touch event detected by a touch screen of a mobile terminal;
when a tap event is triggered, determining, according to the recorded touch event, whether the triggering of the tap event takes place in a page scrolling process; and
cancelling the tap event if the triggering of the tap event takes place in the page scrolling process.

2. The method according to claim 1, further comprising:
allowing the tap event to be sent if the triggering of the tap event does not take place in the page scrolling process.

3. The method according to claim 1, wherein the recording a touch event detected by a touch screen of a mobile terminal comprises:
when a browser control of the mobile terminal is a UIWebView control, recording the touch event detected by the touch screen of the mobile terminal.

4. The method according to claim 1, wherein the recording a touch event detected by a touch screen of a mobile terminal comprises:
when the detected touch event is a touch event of a specified category, modifying an event name of the touch event, and recording a modified event name and a timestamp corresponding to the touch event;
when the detected touch event is not a touch event of the specified category, recording an event name of the touch event and a timestamp corresponding to the touch event;
after a group of new touchstart-touchend events are recorded, determining whether a number of recorded touchstart-touchend groups exceeds N; and
if the number of recorded touchstart-touchend groups exceeds N, deleting, according to timestamps, touch events recorded before N groups of latest touchstart-touchend events, wherein N is a natural number greater than or equal to 1.

5. The method according to claim 4, wherein
when the touch event of the specified category is a touchcancel event, the modifying an event name of the touch event comprises: modifying an event name of the touchcancel event to touchend; and
when the touch event of the specified category is a scroll event, the modifying an event name of the touch event comprising:
determining whether the scroll event is global page scrolling or regional page scrolling according to attribute information of the scroll event;
modifying an event name of the scroll event to scroll:window when the scroll event is global page scrolling; and
modifying the event name of the scroll event to scroll:target when the scroll event is regional page scrolling.

6. The method according to claim 5, wherein when N is equal to 2, the determining, according to the recorded touch event, whether the triggering of the tap event takes place in a page scrolling process comprises:
when the recorded touch event is global page scrolling, if there is no scroll:window event between a first group of touchstart-touchend events and a second group of touchstart-touchend events, and there is a scroll:window event in the second group of touchstart-touchend events, determining that the triggering of the tap event takes place in the page scrolling process; and
when the recorded touch event is regional page scrolling, if there is no scroll:target event in the first group of touchstart-touchend events, and there is a scroll:target event in the second group of touchstart-touchend events or after the second group of touchstart-touchend events, determining that the triggering of the tap event takes place in the page scrolling process.

7. A mobile terminal tap event recognition apparatus, comprising:
an event recording unit, configured to record a touch event detected by a touch screen of a mobile terminal;
a scrolling determining unit, configured to: when a tap event is triggered, determine, according to the recorded touch event, whether the triggering of the tap event takes place in a page scrolling process; and
a tap cancelling unit, configured to cancel the tap event if the triggering of the tap event takes place in the page scrolling process.

8. The apparatus according to claim 7, further comprising:
a tap allowing unit, configured to allow the tap event to be sent if the triggering of the tap event does not take place in the page scrolling process.

9. The apparatus according to claim 7, wherein
the event recording unit is configured to: when a browser control of the mobile terminal is a UIWebView control, record the touch event detected by the touch screen of the mobile terminal.

10. The apparatus according to claim 7, wherein the event recording unit is configured to:
when the detected touch event is a touch event of a specified category, modify an event name of the touch event, and record a modified event name and a timestamp corresponding to the touch event;
when the detected touch event is not a touch event of the specified category, record an event name of the touch event and a timestamp corresponding to the touch event;
after a group of new touchstart-touchend events are recorded, determine whether a number of recorded touchstart-touchend groups exceeds N; and
if the number of recorded touchstart-touchend groups exceeds N, delete, according to timestamps, touch events recorded before N groups of latest touchstart-touchend events, wherein N is a natural number greater than or equal to 1.

11. The apparatus according to claim 10, wherein
when the touch event of the specified category is a touchcancel event, the event recording unit is configured to modify an event name of the touchcancel event to touchend; and
when the touch event of the specified category is a scroll event, the event recording unit is configured to determine whether the scroll event is global page scrolling or regional page scrolling according to attribute information of the scroll event; modify an event name of the scroll event to scroll:window when the scroll event is global page scrolling; and modify the event name of the scroll event to scroll:target when the scroll event is regional page scrolling.

12. The apparatus according to claim 11, wherein when N is equal to 2, the scrolling determining unit is configured to:
when the recorded touch event is global page scrolling, if there is no scroll:window event between a first group of touchstart-touchend events and a second group of touchstart-touchend events, and there is a scroll:window event in the second group of touchstart-touchend events, determine that the triggering of the tap event takes place in the page scrolling process; and
when the recorded touch event is regional page scrolling, if there is no scroll:target event in the first group of touchstart-touchend events, and there is a scroll:target event in the second group of touchstart-touchend events or after the second group of touchstart-touchend events, determine that the triggering of the tap event takes place in the page scrolling process.

13. A mobile terminal tap event recognition apparatus, comprising:
a processor;
a memory configured to store machine-executable instructions, wherein
by reading and executing the machine-executable instructions stored in the memory and corresponding to ** logic, the processor is caused to:
record a touch event detected by a touch screen of a mobile terminal;
when a tap event is triggered, determine, according to the recorded touch event, whether the triggering of the tap event takes place in a page scrolling process; and
cancel the tap event if the triggering of the tap event takes place in the page scrolling process.
